Europäisches Patentamt

European Patent Office

Office européen des brevets

(19)

(11) Veröffentlichungsnummer: **0 223 096**
**B1**

(12) # EUROPÄISCHE PATENTSCHRIFT

(45) Veröffentlichungstag der Patentschrift:
**10.01.90**

(51) Int. Cl.⁴: **H01J 9/227**, C03C 17/04,
H01J 29/30

(21) Anmeldenummer: **86114653.8**

(22) Anmeldetag: **22.10.86**

(54) Verfahren zum Aufbringen einer Matrix.

(30) Priorität: **26.10.85 DE 3538167**

(43) Veröffentlichungstag der Anmeldung:
**27.05.87 Patentblatt 87/22**

(45) Bekanntmachung des Hinweises auf die Patenterteilung:
**10.01.90 Patentblatt 90/2**

(84) Benannte Vertragsstaaten:
**AT DE FR GB IT NL**

(56) Entgegenhaltungen:
**AU-B- 492 567**
**DE-C- 2 806 436**

(73) Patentinhaber: **Nokia Unterhaltungselektronik
(Deutschland) GmbH, Oestliche
Karl-Friedrich-Strasse 132, D-7530 Pforzheim(DE)**

(72) Erfinder: **Schlipf, Michael, Dr., Epplerinweg 31,
D-7060 Schorndorf(DE)**

ACTORUM AG

## Beschreibung

Die Erfindung bezieht sich auf ein Verfahren zum Aufbringen einer Matrix aus aus Glaslot auf die Innenseite eines Schirmglases einer Farbbildwiedergabevorrichtung.

Aus der DE-PS 2 806 436 ist ein Verfahren zur Herstellung der Schwarzumrandung von Leuchtpunkten auf dem Schirmglas eines Farbbildschirmes bekannt. Dabei wird das Schirmglas mit einer Aufschlämmung aus einem hellen Glaslotpulver, Metall in oxidischer Form und Fotolack durch Sprühen beschichtet. Diese Aufschlämmung wird dann durch eine Maske belichtet und entwickelt, wobei die belichteten Teile abgelöst werden. In einem nachfolgenden Temperprozeß bei Temperaturen zwischen 350° und 500° wird dann die entstandene Matrix in die gewünschte Schwarzumrandung umgewandelt.

Der Erfindung liegt die Aufgabe zugrunde, ein einfaches Verfahren zum Aufbringen einer Matrix aus Glaslot mit eng benachbarten Stegen mit einer geringen Stegbreite anzugeben.

Die Lösung der ersten Aufgabe erfolgt mit dem im Anspruch 1 angegebenen Mittel. Eine vorteilhafte Ausgestaltung der Erfindung ist im Anspruch 2 enthalten.

Die Erfindung wird nun anhand von einem in den Figuren gezeigten Ausführungsbeispiel näher erläutert. Es zeigen:

Fig. 1 eine perspektivische Ansicht eines Teils des Schirmglases der Farbbildwiedergabevorrichtung und

Fig. 2 einen Schnitt durch das Schirmglas entlang der Linie II-II in Fig. 1.

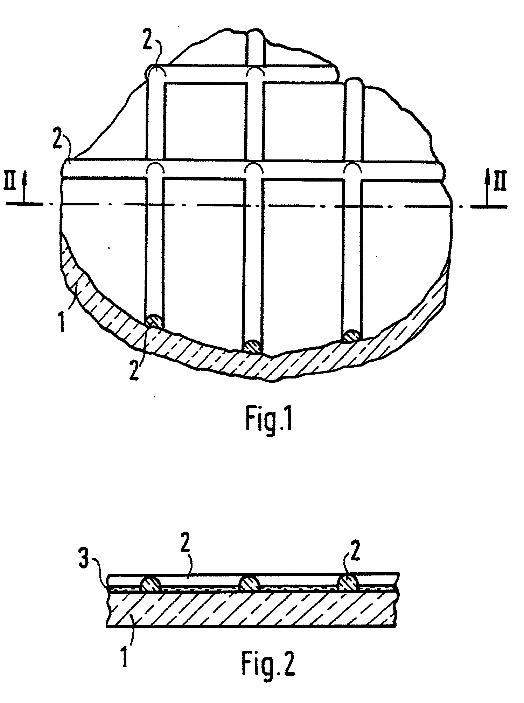

In Fig. 1 ist von der Farbbildwiedergabevorrichtung nur deren beispielsweise ebenes Schirmglas 1 in einem Ausschnitt dargestellt. Die dem Betrachter zugewandte Seite ist dabei die Innenseite des Schirmglases 1 und auf dieser ist eine Matrix 2 aus Glaslot aufgebracht. Die Matrix kann aus sich kreuzenden oder nur parallel verlaufenden Stegen bestehen. In Figur 1 ist oberhalb der Schnittlinie II-II eine Matrix aus sich kreuzenden Stegen und unterhalb eine aus nur parallel verlaufenden Stegen dargestellt. Die Breite der Stege der Matrix 2 beträgt etwa 60 μm und die Stege haben einen Abstand von etwa 140 μm. In die durch die Matrix erzeugten Vertiefungen wird später der Leuchtstoff 3 (Fig. 2) eingebracht.

Das Glaslot der Matrix 2 besteht aus einem bei thermischer Kristallisation schrumpfenden Glaslot. Hierzu muß das Glaslot einen hohen Anteil an feinkörnigem Werkstoff aufweisen, so daß kein Fließen, sondern das gewünschte Schrumpfen des Glaslotes erfolgt. Der Schrumpfeffekt ist abhängig von der relativen Oberfläche der Kristallisationskeime im Glaslot, so daß sich der Schrumpfeffekt entweder durch Zugabe von Kristallisationskeimen zum Glaslot oder durch das Zerkleinern der im Glaslot vorhandenen Kristallisationskeime erreichen läßt. Als Ausgangsmaterial für das Glaslot kann beispielsweise das Glaslotpulver vom Typ 7590 Special der Firma Corning Glas verwendet werden. Bei diesem Glaslotpulver ist die Korngröße von 90% der Körner kleiner als 10 μm.

Im in Fig. 2 dargestellten Schnitt entlang der Linie II/II in Fig. 1 ist zu erkennen, daß in den durch die Matrix 2 gebildeten Vertiefungen der Leuchtstoff 3 vorhanden ist. Bei einer Matrix mit sich kreuzenden Stegen entstehen Leuchtstoffflecke und bei parallel verlaufenden Stegen entstehen Leuchtstoffstreifen.

Bei der Herstellung der Farbbildwiedergabevorrichtung wird auf folgende Weise vorgegangen:

Das Glaslotpulver wird mit Binder (Methacrylat) und Lösungsmittel (Butyldiglykolacetat) zu einer Glaslotpaste angerührt. Auf dem als Substrat dienenden Schirmglas 1 wird dann diese Glaslotpaste durch Siebdrucken in Form der gewünschten späteren Matrix 2 aufgebracht. Das Schirmglas 1 mit der aufgedruckten Glaslotpaste wird danach einem Temperprozeß ausgesetzt, bei dem die Kristallisation des Glaslotes stattfindet. Das Tempern geschieht bei etwa 440°C für eine Zeitdauer von 45 Minuten mit den üblichen Temperaturgradienten beim Aufheizen und Abkühlen. Hierbei schrumpft dann das Glaslot und es entstehen die gewünschten schmalen Stege der Matrix.

Bisher konnte man mit Siebdrucken die erforderlichen schmalen Stege der Matrix 2 auf dem Schirmglas 1 nicht in ausreichender Qualität herstellen, weil eine minimale Maschenweite und ein bestimmter Fadendurchmesser der Siebdruckschablone nicht unterschritten werden kann. Durch den Einsatz eines schrumpfenden Glaslotes ist es nun möglich, Siebdruckschablonen mit einer größeren Linienbreite zu verwenden. Hieraus resultiert eine einfachere Herstellung der Siebdruckschablonen und man erhält eine bessere Druckbarkeit der Glaslotpaste und gleichzeitig die gewünschten kleinen Stegbreiten der Matrix.

## Patentansprüche

1. Verfahren zum Aufbringen einer Matrix aus Glaslot auf die Innenseite eines Schirmglases einer Farbbildwiedergabevorrichtung, dadurch gekennzeichnet, daß die Matrix durch Siebdrucken des Glaslotes auf das Schirmglas (1) aufgebracht und danach ein Temperprozeß zur Kristallisation des Glaslotes durchgeführt wird, wobei das Glaslot ein im Temperprozeß zur Kristallisation schrumpfendes Glaslot ist.

2. Verfahren nach Anspruch 1, dadurch gekennzeichnet, daß die Korngröße des Glaslotpulvers im Glaslot von 90% der Körner kleiner als 10μm ist.

## Claims

1. Process for applying a matrix of glass solder to the inner surface of the glass screen of a colour picture display device, characterized in that the matrix is applied to the glass screen (1) by means of silk screen printing and then subjected to a tempering process in order to crystallize the glass solder, where the glass solder is such that it will shrink during the said tempering process.

2. Process according to Claim 1, characterized in that the size of 90% of the grains of the glass solder powder in the glass solder is smaller than 10μm.

**Revendications**

1. Procédé pour l'application d'une matrice en fritte sur l'intérieure d'un verre-écran d'un dispositif de reproduction couleurs, caractérisé en ce que la matrice est appliquée sur le verre-écran (1) par sérigraphie de la fritte et ensuite un procédé d'attrempage cristallise la fritte, la fritte étant telle qu'elle se contracte pendant le procédé d'attrempage pour la cristallisation.

2. Procédé selon la revendication 1, caractérisé en ce que la grosseur de grain de la poudre de fritte dans la fritte est inférieure à 10μm dans 99% des grains.

Fig.1

Fig.2